(19)

Europäisches
Patentamt
European
Patent Office
Office européen
des brevets

(11) **EP 4 220 192 A1**

(12) **EUROPEAN PATENT APPLICATION**
published in accordance with Art. 153(4) EPC

(43) Date of publication:
**02.08.2023 Bulletin 2023/31**

(21) Application number: **21872954.9**

(22) Date of filing: **24.09.2021**

(51) International Patent Classification (IPC):
**G01Q 20/00** *(2010.01)*  **G01B 7/012** *(2006.01)*
**G01B 7/00** *(2006.01)*  **G01B 7/26** *(2006.01)*
**G01Q 10/04** *(2010.01)*

(52) Cooperative Patent Classification (CPC):
**G01B 7/00; G01B 7/012; G01B 7/26; G01Q 10/04; G01Q 20/00**

(86) International application number:
**PCT/KR2021/013060**

(87) International publication number:
**WO 2022/065926 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2020 KR 20200123750**
　　　　　　**23.09.2021 KR 20210125985**

(71) Applicant: **Park Systems Corp.**
**Yeongtong-gu**
**Suwon-si, Gyeonggi-do 16229 (KR)**

(72) Inventors:
• **JO, Ahjin**
　**Seoul 06204 (KR)**
• **BAIK, Seung Hun**
　**Seoul 03007 (KR)**
• **YUN, Seonghun**
　**Suwon-si Gyeonggi-do 16229 (KR)**
• **AHN, Byoung-Woon**
　**Anyang-si Gyeonggi-do 14045 (KR)**
• **PARK, Sang-Il**
　**Seongnam-si Gyeonggi-do 13540 (KR)**

(74) Representative: **Fabry, Bernd**
**IP2 Patentanwalts GmbH**
**Schlossstrasse 523-525**
**41238 Mönchengladbach (DE)**

(54) **METHOD FOR MEASURING CHARACTERISTICS OF SURFACE OF OBJECT TO BE MEASURED BY MEANS OF MEASURING APPARATUS USING VARIABLE SET POINT SETTING, ATOMIC MICROSCOPE FOR PERFORMING METHOD, AND COMPUTER PROGRAM STORED IN STORAGE MEDIUM FOR PERFORMING METHOD**

(57) Disclosed is a method for measuring the characteristics of the surface of the object to be measured by means of a measuring apparatus for measuring the characteristics of the surface of the object to be measured by measuring an interaction between a tip and the surface of the object to be measured.

The method, according to an embodiment of the present invention is a method for measuring the characteristics of the surface of the object to be measured by repeating an approaching operation of bringing the tip close to and in contact with the surface of the object to be measured and a lifting operation. The approaching operation is performed by controlling such that a characteristic value reaches a set point, and the set point is variably set on the basis of the state of the point on which the approaching operation is performed.

EP 4 220 192 A1

**(Cont. next page)**

(a)

(b)

(c)

# FIG. 9

## Description

[Technical Field]

The present invention relates to a method for measuring characteristics of a surface of an object to be measured by means of a measuring apparatus using variable set point settings, an atomic microscope for performing the same method, and a computer program stored in a storage medium to perform the same method, and more particularly, to a method for measuring characteristics of a surface of an object to be measured by variably setting set points on the basis of a state of a point being approached during an approaching operation of a pin point mode, an atomic force microscope for performing the same method, and a computer program stored in a storage medium to perform the same method.

[Background Art]

A scanning probe microscope (SPM) refers to a microscope which scans a surface of a specimen with a fine tip (probe) manufactured by an MEMS process to measure characteristics of a surface of an object to be measured and displays a result as a 3D image. Such a scanning probe microscope is classified into an atomic force microscope (AFM), a scanning tunneling microscope (STM), and the like, depending on a measurement method.

In the scanning probe microscope, generally, the tip follows and scans the surface of the object to be measured. Therefore, even though an interval between the tip and the surface of the object to be measured is feedback-controlled, the collision between the tip and the surface of the object to be measured is inevitable, which causes the damage to the tip. In order to reduce the damage, there has been an attempt to measure a height of only a specific point to obtain a topography of a surface of the object to be measured by repeating an operation of positioning the tip to approach the surface of the object to be measured, lifting the tip by a predetermined height, moving the tip to another position, and again positioning the tip to approach the surface of the object to be measured (see Patent Document 1).

In addition to the object for minimizing the damage of the tip, there also has been an attempt to utilize the above-described technique so as not to reflect a curve image of the surface of the object to be measured in an option signal, such as EFM or MFM (see Patent Document 2). Such a technique is also referred to as a pin point mode.

In the meantime, in accordance with the miniaturization and the integration of the semiconductor, a narrow and deep trench structure has been created. In order to obtain a shape of the narrow and deep trench, the scanning probe microscope, such as an atomic force microscope is utilized and due to the shape characteristic which is narrow and deep, a tip which is at least longer than a height of the trench needs to be selected. Further, in order to minimize the interference with the sidewall of the trench, the tip needs to be as thin as possible. Due to this restriction of the tip, it is very difficult to control the long tip to follow the surface of the narrow and deep trench.

Accordingly, in order to measure the narrow and deep trench shape, a pin point mode is utilized. In order to apply a pin point mode using a long tip, generally, a contact mode approach is performed by setting a force-set point which has been determined in advance. In the case of a narrow and deep trench, a fairly high force-set point is set to overcome the force interference from the sidewall, which leads to tip breakage.

[Patent Document 1]
Japanese Laid-Open Publication No. 2004-132823 (Title of invention: Sampling scanning probe microscope and scanning method)
[Patent Document 2]
Korean Registered Patent No. 10-2102637 (Title of invention: Topography signal and option signal acquisition method, apparatus and atomic force microscope having the same)

[Disclosure]

[Technical Problem]

The present invention has been in an effort to solve the above-described problem and an object thereof is to provide a method for measuring characteristics of a surface of an object to be measured by variably setting set points on the basis of a state of a point being approached during an approaching operation of a pin point mode, an atomic microscope for performing the same method, and a computer program stored in a storage medium to perform the same method.

Objects of the present invention are not limited to the above-mentioned object, and other objects, which are not mentioned above, can be clearly understood by those skilled in the art from the following descriptions.

[Technical Solution]

In order to achieve the above-mentioned object, a method according to an exemplary embodiment of the present invention is a method for measuring characteristics of a surface of an object to be measured by means of a measuring apparatus for measuring the characteristics of the object to be measured by measuring an interaction between a tip and the surface of the object to be measured and a method for measuring characteristics of a surface of the object to be measured by repeating an approaching operation of bringing the tip close to and in contact with the surface of the object to be measured and a lifting operation. The approaching operation is performed by controlling such that the characteristic value reaches a set point and the set point is variably set on the basis of a state of a point on which the approaching operation is performed.

According to another feature of the present invention, the characteristic value is a value which varies according to a distance between the tip and the object to be measured.

According to still another feature of the present invention, the set point is determined when a variance of the characteristic value with respect to a decreased amount of the distance between the tip and the object to be measured is equal to or higher than a specific value.

According to still another feature of the present invention, the characteristic value is a force that the tip presses the object to be measured.

According to another feature of the present invention, the set point is a force-set point and the force-set point is determined when a variance $\Delta F$ in the force of the tip pressing the surface of the object to be measured with respect to a decreased amount $\Delta z$ of the distance between the tip and the object to be measured is higher than or equal to a specific value.

According to still another feature of the present invention, the force-set point is determined by adding the variance $\Delta F$ in the force to a force measured in the distance for a value obtained by subtracting the decreased amount $\Delta z$ from a current distance $z_{distance}$ between the tip and the object to be measured.

According to still another feature of the present invention, the force-set point is set so as not to exceed a predetermined maximum force-set point.

In order to achieve the above-described objects, an atomic microscope according to an aspect of the present invention is configured to measure a surface of an object to be measured by a probe unit including a tip and a cantilever. The atomic microscope includes an XY scanner configure to move the object to be measured to allow the tip to relatively move in an XY direction with respect to the surface of the object to be measured; a head configured to mount the probe unit and include an optical system which measures a vibration or a flexure of the cantilever and a Z scanner configured to move the probe unit in the Z direction to control a distance between the tip and the surface of the object to be measured based on data obtained by the optical system; and a controller which controls the XY scanner and the head. The controller controls the XY scanner and the head to measure a characteristic of the surface of the object to be measured by repeating an approaching operation of bringing the tip close to and in contact with the surface of the object to be measured and a lifting operation, and the approaching operation is performed by controlling such that the characteristic value reaches a set point and the set point is controlled to variably set on the basis of a state of a point on which the approaching operation is performed.

A computer program according to an exemplary embodiment of the present invention to solve the problem above is stored in a storage medium to perform the above-described method.

[Advantageous Effects]

According to the method of the present invention, different set points are set in accordance with a situation of a surface of an object to be measured to prevent a damage of the tip due to the excessive press and interaction with a sidewall is overcome to bring the tip in contact with a bottom flat surface, thereby providing a pin point mode to achieve precise characteristics of the object to be measured.

[Description of Drawings]

FIG. 1 is a schematic perspective view of an atomic microscope in which an XT scanner and a Z scanner are separated.
FIG. 2 is a conceptual view explaining a method of measuring an object to be measured using an optical system.
FIG. 3 is a schematic flowchart of a method for measuring characteristics of a surface of an object to be measured of the present invention.
FIG. 4 is a conceptual view schematically illustrating a method for measuring characteristics of a surface of an object to be measured of the present invention.
FIG. 5 is a view illustrating F-D curves according to a point being approached.
FIG. 6 is a view illustrating F-D curves according to various approach situations at a top corner portion.
FIG. 7 is a view illustrating an F-D curve according to a situation approaching while being in contact with a sidewall.
FIG. 8 is a view illustrating an F-D curve according to a situation in which a tip approaches the bottom without being in contact with a sidewall.
FIG. 9 is graphs of a F-D curve illustrating a variable force-set point setting method according to the present invention.
FIG. 10 is a view illustrating a force-set point according to a shape of an object to be measured.

[Modes of the Invention]

Advantages and characteristics of the present invention and a method of achieving the advantages and characteristics will be clear by referring to exemplary embodiments described below in detail together with the accompanying drawings. However, the present invention is not limited to exemplary embodiment disclosed herein but will be implemented in various forms. The exemplary embodiments are provided by way of example only so that a person of ordinary skill in the art can fully understand the disclosures of the present invention and the scope of the present invention. Therefore, the present invention will be defined by the scope of the appended claims.

Although the terms "first", "second", and the like are used for describing various components, these components are not confined by these terms. These terms are merely used for distinguishing one component from the other components. Therefore, a first component to be mentioned below may be a second component in a technical spirit of the present invention. Further, even though it is described that the second coating is performed after the first coating, the coating performed in a reverse order is also included in the technical spirit of the present invention.

When the reference numerals are used in the present specification, when even in different drawings, the same component is illustrated, the same reference numeral is used as much as possible.

A size and a thickness of each component illustrated in the drawing are illustrated for convenience of description, and the present invention is not limited to the size and the thickness of the component illustrated.

*Configuration of atomic microscope for carrying out present invention*

First, as a measuring apparatus for performing the method of the present invention, a configuration of an atomic microscope will be described as an example.

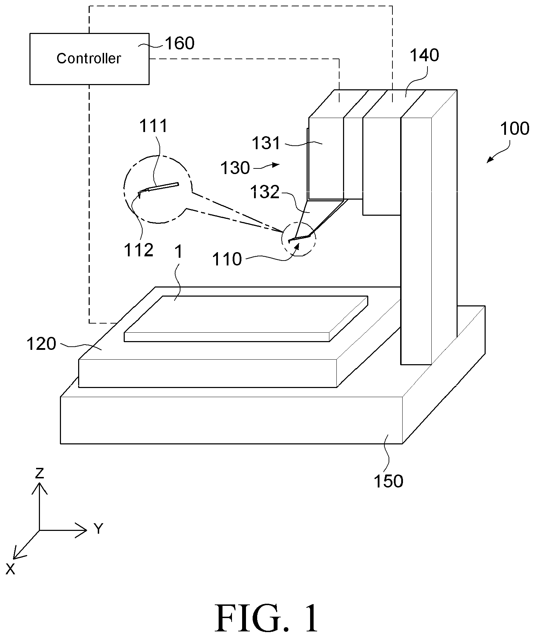

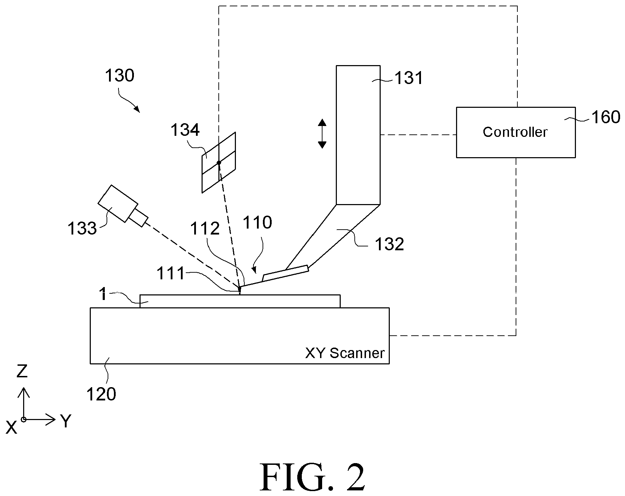

FIG. 1 is a schematic perspective view of an atomic microscope in which an XT scanner and a Z scanner are separated and FIG. 2 is a conceptual view explaining a method for measuring an object to be measured using an optical system.

Referring to FIG. 1, the atomic force microscope 100 is configured to include a probe unit 110, an XY scanner 120, a head 130, a Z stage 140, a fixed frame 150, and a controller 160.

The probe unit 110 includes a cantilever 111 and a tip 112 and is configured to allow the tip 112 to follow a surface of the object 1 to be measured in a contact or non-contact state. The probe unit 110 is provided separately from the other following configurations and is used to be fixed to the head 130.

The XY scanner 120 is configured to relatively move the tip 112 in a first direction with respect to a surface of the object 1 to be measured to move the object 1 to be measured. Specifically, the XY scanner 120 serves to scan the object 1 to be measured in an X direction and a Y direction on an XY plane.

The head 130 is configured such that the probe unit 110 is mounted thereto and includes an optical system which measures a vibration or a flexure of the cantilever 111 and the Z scanner 131 configured to move the probe unit 110 at least in the second direction or an opposite direction to control a distance between the tip and a surface of the object to be measured based on data obtained by the optical system. The optical system will be described below with reference to FIG. 2. Here, the Z scanner 131 moves the probe unit 110 in a relatively small displacement.

The Z stage 140 moves the probe unit 110 and the head 130 in a relatively large displacement in the Z direction.

The fixing frame 150 fixes the XY scanner 120 and the Z stage 140.

The controller 160 is configured to control at least the XY scanner 120, the head 130, and the Z stage 140.

In the meantime, the atomic force microscope 100 may further include an XY stage (not illustrated) configured to move the XY scanner 120 on the XY plane with a large displacement. In this case, the XY stage will be fixed to the fixing frame 150.

The atomic force microscope 100 scans the surface of the object 1 to be measured with the probe unit 110 to obtain an image such as a topography. The relative movement between the surface of the object 1 to be measured and the probe unit 110 may be performed by the XY scanner 120 and the Z scanner 131 vertically moves the probe unit 110 to follow the surface of the object 1 to be measured. In the meantime, the probe unit 110 and the Z scanner 131 are connected by a probe arm 132.

Referring to FIG. 2, the XY scanner 120 supports the object 1 to be measured and scans the object 1 to be measured in the XY direction. The driving of the XY scanner 120 may be generated, for example, by a piezoelectric actuator. When the XY scanner is separated from the Z scanner 131 as described in the exemplary embodiment, a stacked piezoelectric driver (staced piezo) may be used. Regarding the XY scanner 120, refer to Korean Registered Patent Nos. 10-0523031 (Title of invention: XY scanner in scanning probe microscope and method driving the same) and 10-1468061 (Title of invention: control method of scanner and scanner device using thereof) which are registered by the present applicant.

The Z scanner 131 is connected to the probe unit 110 to adjust a height of the probe unit 110. The driving of the Z scanner 131 may also be performed by the piezoelectric actuator, like the XY scanner 120. Regarding the Z scanner 131, refer to Korean Registered Patent No. 10-1476808 (Title of invention: scanner apparatus and atomic force microscope including the same) which is registered by the present applicant. When the Z scanner 131 is contracted, the probe unit 110 moves away from the surface of the object 1 to be measured and when the Z scanner 131 extends, the probe unit 110 is close to the surface of the object 1 to be measured.

As illustrated in FIGS. 1 and 2, the XY scanner 120 and the Z scanner 131 may be separated to be provided as separate members, but may be integrated by a tube type piezoelectric actuator as one member. In the case of the tube type piezoelectric actuator, the movement in the XY direction and the movement in the Z direction may be performed together. However, there is a problem in that the behavior in the XY direction and the behavior in the Z direction are coupled to distort an image. However, despite the limitation, this structure may also be utilized in the present invention. Such an XYZ-integrated scanner is disclosed in US 2012-0079635A1 (Title of invention: Methods and devices for correcting errors in atomic force microscopy) and also other known structures of the atomic force microscope may be used.

The head 130 has an optical system which measures vibration or a flexure of the cantilever 111 of the probe unit 110 and the optical system includes a laser generation unit 132 and a detector 133.

The laser generation unit 132 irradiates laser light (illustrated with dotted line) onto a surface of the cantilever 111 of the probe unit 110 and laser light reflected from the surface of the cantilever 111 is focused on a biaxial detector 133, such as a position sensitive photo detector (PSPD). The signal detected by the detector 133 is sent to the controller 160 to be controlled.

The controller 160 is connected to the XY scanner 120 and the Z scanner 131 to control the driving of the XY scanner 120 and the Z scanner 131. Further, the controller 160 may convert a signal obtained from the detector 133 into a digital signal by an ADC converter and determine a degree of flexure or warpage of the cantilever 111 of the probe unit 110 by utilizing the converted signal. A computer may be integrated with the controller 160 or a separate computer may be connected to the controller 160. The controller 160 is integrated as one to be put in a rack or may be divided into two or more parts.

The controller 160 transmits a signal which drives the XY scanner 120 to scan the object 1 to be measured by the XY scanner 120 in the XY direction and controls the Z scanner 131 to allow the probe unit 110 to have a constant interactive force with the surface of the object 1 to be measured (that is, the cantilever 111 maintains a constant degree of flexure or the cantilever 111 vibrates with a constant amplitude). That is, the controller 160 has a software or electric circuit closed loop feedback logic. Further, the controller 160 measures a length of the Z scanner 131 (or a length of an actuator used for the Z scanner 131) or measures a voltage which is applied to the actuator used for the Z scanner 131, thereby obtaining shape data (topography) of the surface of the object 1 to be measured.

Here, the tip 112 of the probe unit 110 may relatively move with respect to the surface of the object 1 to be measured while being in contact with the surface of the object 1 to be measured (this is referred to as a "contact mode") or relatively move with respect to the surface of the object 1 to be measured in a state which is not in contact with the surface (this is referred to as a "non-contact mode"). Further, the tip 112 may relatively move with respect to the surface of the object 1 to be measured while vibrating and tapping the surface of the object 1 to be measured (this is referred to as a "tapping mode"). Such various modes correspond to a mode which has been developed in the related art so that a detailed description thereof will be omitted.

In the meantime, data about the surface of the object 1 to be measured obtained by the controller 160 may various, as well as the shape data. For example, a specific treatment is performed to apply a magnetic force or an electrostatic force to the probe unit 110 to obtain data about the magnetic force, data about the electrostatic force, etc. of the surface of the object 1 to be measured. Modes of the atomic force microscope include a magnetic force microscopy, an electrostatic force microscopy, and the like, which may be implemented using a known method. In addition, data about the surface of the object 1 to be measured may be a voltage of the surface, a current of the surface, or the like.

In the meantime, it should be noted that as a configuration of the head 130, for the convenience of description, only essential components have been described, other specific configurations of the optical system are omitted. For example, the head 130 may further include components disclosed in Korean Registered Patent No. 10-0646441.

*Method for measuring characteristics of surface of object to be measured*

Hereinafter, an exemplary embodiment of a method for measuring characteristics of a surface of an object to be measured of the present invention will be described with reference to the accompanying drawings.

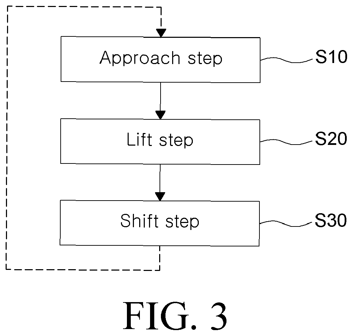

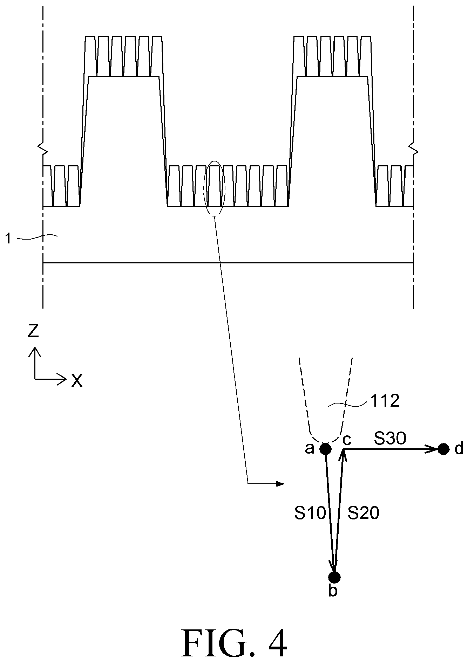

FIG. 3 is a schematic flowchart of a method for measuring characteristics of a surface of an object to be measured of the present invention and FIG. 4 is a conceptual view schematically illustrating a method for measuring characteristics of a surface of an object to be measured of the present invention.

Referring to FIG. 3, the method for measuring characteristics of a surface of an object to be measured of the present invention is performed by a measuring apparatus, such as an atomic force microscope 100 illustrated in FIGS. 1 and 2, which measures characteristics of the object to be measured by measuring an interaction between a tip and a surface of the object to be measured and includes an approach step S10, a lift step S20, and a shift step S30. Hereinafter, the method of the present invention will be described also with reference to FIGS. 1 and 2.

First, the tip 112 is positioned to come into contact with a specific position (first position) of a surface of an object to be measured (approach step S10).

Referring to FIG. 4, in the step S10, the measuring apparatus performs an operation of sending an end of the tip positioned in a point a to a point b (first position) to be in contact therewith. The point a is an arbitrary position and may be a position of the end of the tip 112 after completing the previous shift step S30. The position (first position) of the tip 112 after the approach is an arbitrary point to be measured.

The approach step S10 is performed to bring the tip 112 close to the surface of the object 1 to be measured using the Z scanner 131. The approach step S10 is completed by allowing the end of the tip 112 to press the surface of the object 1 to be measured with a specific force. When the end of the tip 112 is pressed with a specific force, the cantilever 111 is bent and the bending of the cantilever 111 is sensed by an optical system including a laser generation unit 133 and the detector 134. When the cantilever 111 is bent by a predetermined degree, the approach step S10 is completed and data about the position of the end of the tip 112 is collected. The data is obtained from the Z scanner 131, by a length sensor (for example, a strain gauge sensor) attached to the Z scanner 131, or the like. In addition, a specific control method in the approach step S10 will be described below.

After the approach step S10 is completed, when the above-described data is obtained, the contacted tip 112 is spaced apart from the surface of the object to be measured (lift step S20).

Referring to FIG. 4, in the present step S20, the measuring apparatus lifts the end of the tip 112 positioned in the point b to a point c. For reference, the point c may be equal to the point a, or may not be equal as illustrated in FIG. 4. If the Z scanner 131 which moves the tip 112 in the z direction implements a complete directivity, points a and c match and a path of the tip 112 by the approach step S10 may overlap the path of the tip 112 by the lift step S20.

The tip 112 lifted by the lift step S20 is controlled to be positioned on the other position (second position) different from the first position to collect data in the other location (shift step S30).

Referring to FIG. 4, in the step S30, the measuring apparatus moves the end of the tip positioned in the point c to a point d positioned above the second position. The movement of the tip 112 may be implemented by moving the tip 112, but may also be implemented by moving the object 1 to be measured by the XY scanner 120. According to the measuring apparatus illustrated in FIGS. 1 and 2, the XY scanner 120 is controlled to move the object 1 to be measured to perform the shift step S30.

As illustrated in FIG. 4, the shift step S30 may be implemented to move the tip 112 to be parallel to the X direction, but may also have any route to move onto another planned position.

Further, the shift step S30 is included in the lift step S20 so as not to be performed as a separate step. When the lift step S20 is performed, the tip 112 is horizontally moved while being lifted so that the lift step S20 may be omitted.

The approach step S10, the lift step S20, and the shift step S30 are repeatedly performed on the plurality of positions of the surface of the object 1 to be measured to measure characteristics of the object 1 to be measured. Here, the characteristics of the object 1 to be measured may be a topography of the surface of the object 1 to be measured. In addition, a specific characteristic (a magnetic property, an electric property, and the like) is applied to the tip 1 to obtain information other than the topography.

As illustrated in FIG. 4, data which may be obtained in a typical contact mode or non-contact mode may be obtained by repeating the above-described steps S10, S20, and S30 on the plurality of positions of the surface of the object 1 to be measured along the X direction. Specifically, in the measurement of the deep and narrow trench structure illustrated in FIG. 4, a very difficult feedback condition needs to be found out for the tip 112 to follow the surface of the object 1 to be measured in a contact mode or a non-contact mode of the related art. When the feedback condition is not satisfied, the tip 112 collides with the object 1 to be measured so that an inferior image is obtained and the tip 112 needs to be frequently replaced. On the contrary, when the method according to the present invention is utilized, even in the measurement of the deep and narrow trench structure, an excellent image may be obtained while minimizing a damage of the tip 112.

*F-D curve in various approach situations*

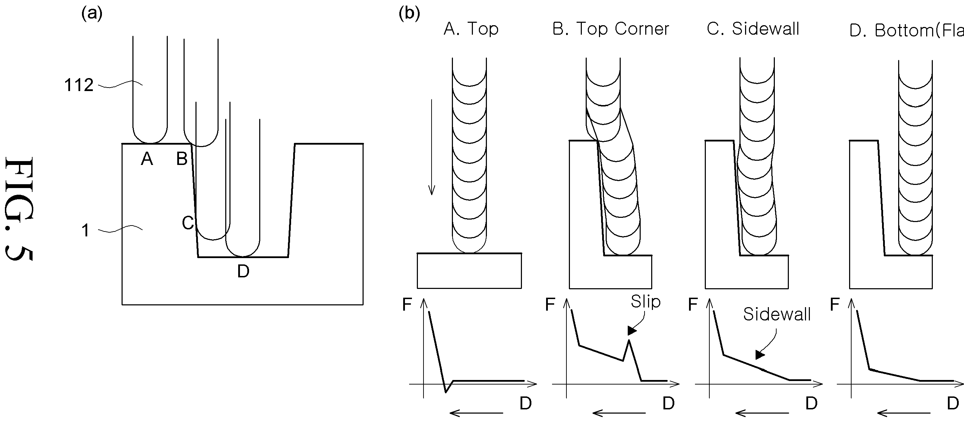

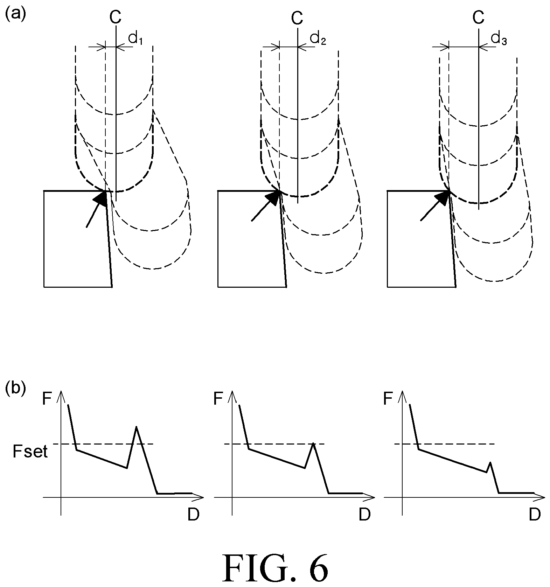

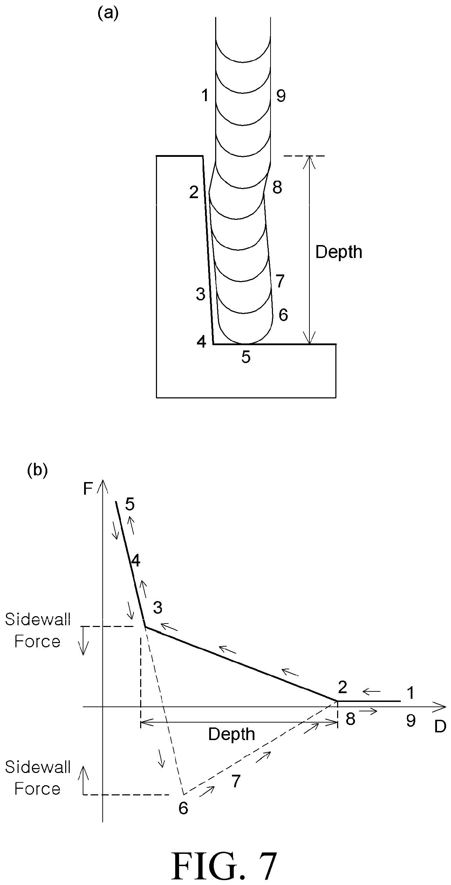

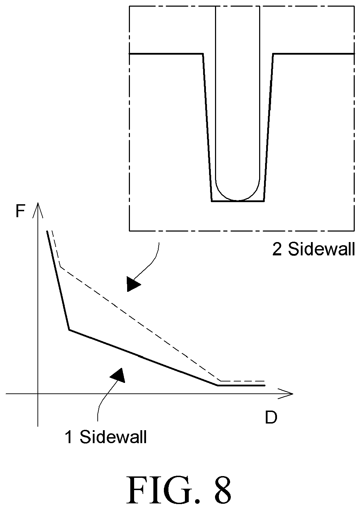

FIG. 5 is a view illustrating F-D curves according to a point being approached, FIG. 6 is a view illustrating F-D curves according to various approach situations at a top corner portion, FIG. 7 is a view illustrating an F-D curve according to a situation approaching while being in contact with a sidewall, and FIG. 8 is a view illustrating an F-D curve according to a situation in which a tip approaches the bottom without being in contact with a sidewall.

Referring to FIGS. 5 to 8, when a deep and narrow trench structure is measured, various situations which may be caused during the approaching operation will be described.

First, referring to FIG. 5, a tip 112 may approach a top flat portion indicated by A, a top corner portion indicated by B, a sidewall portion indicated by C, and a bottom flat portion indicated by D.

In the case of approaching a top flat portion indicated by A, as a distance D between the tip 112 and the object 1 to be measured is reduced (that is, as the approaching operation is performed), a force between the tip 112 and the object 1 to be measured does not act, but after the tip 112 is adhered to the surface of the object 1 to be measured (a negative force acts), when the approach further proceeds, the tip 112 presses the surface of the object 1 to be measured so that the pressing force F increases.

When the approach is performed while the end of the tip 112 is in contact with the top corner portion indicated by B, as soon as the tip 112 and the corner portion are in contact with each other, the pressing force F increases and slip occurs so that the pressing force F decreases, and thus the pressing force F temporarily increases and then decreases. Thereafter, the tip 112 descends while being in contact with the sidewall to increase the pressing force F and is in contact with the bottom flat surface to sharply increase the pressing force F.

As illustrated in C, when the tip 112 does not touch the top corner portion and directly contacts the sidewall, and then the tip 112 descends while following the sidewall in a contact state, there is not a portion in which the pressing force F suddenly increases and then decreases, but there is a section in which the pressing force F slightly increases according to the distance D due to the friction with the sidewall.

As illustrated in D, even though the approach is performed such that the sidewall and the tip 112 are not in contact with each other, but the tip directly touches the bottom flat surface, there is a section in which the pressing force F slightly increases according to the distance D due to the interaction with the sidewall.

As described above, the situations A to D may occur. However, in the cases A and B, there is no need to set the large force-set point, but in the cases C and D, when the insufficient force-set point is set, the approach stops before the tip 112 reaches the bottom flat surface so that a desired measurement value cannot be obtained. That is, also in the cases C and D, a slightly high force-set point is set to allow the tip 112 to sufficiently reach the bottom flat surface. However, in the case B, slipping undesirably occurs in the corner so that the tip 112 is damaged and undesired data is obtained. Accordingly, different force-set points need to be set for every situation.

FIG. 6 illustrates various forms in that the tip is in contact with a top corner portion. In the case of contacting with a distance $d_1$ from the center of the tip 112, since a large reaction force is applied at the corner, a large force is required until it slides down, resulting in the highest peak in the F-D curve. When the tip 112 is in contact with the corner with a distance $d_2$ which is larger than di, a smaller peak is formed and in case of the distance $d_3$ which is larger than $d_2$, the smallest peak is formed.

In the meantime, in the section after the peak in the F-D curve, the tip 112 slides down the sidewall so that there is a section in which as D decreases due to a frictional force, F gradually increases and at the moment when the tip 112 touches the bottom flat surface, F sharply increases.

If the force-set point is set as Fset, in second and third examples, as slip occurs, the tip 112 is pushed down to the bottom flat surface so that the tip 112 is damaged. Accordingly, in the situation as illustrated in FIG. 6, it is not desirable to set the force-set point based on the tip touching the flat surface.

Referring to FIG. 7, it is confirmed that when the tip 112 approaches while being in contact with the sidewall, a section (section between 2 and 3) in which the tip slides down while being in contact with the sidewall is illustrated in the F-D curve. A gradient of the section between 2 and 3 may vary depending on a roughness, an angle, and the like of the sidewall.

Further, in addition to a frictional force which acts on the tip 112 from the sidewall, an attractive or repulsive force is applied from the sidewall. The force due to the sidewall acts not only on the end of the tip 112, but also on the side surface of the tip 112 to affect the force which is applied to the tip 112. The force by the sidewall acts in an opposite direction to the moving direction of the tip 112.

When the tip 112 is attached to the sidewall, rather than contact with the corner as illustrated in FIG. 6, the tip 112 needs to be pushed down to the bottom flat surface to obtain a desired result. That is, the tip 112 needs to pass the section between 2 and 3 to a section 4 or 5. Accordingly, unlike the case in FIG. 6, a higher force-set point is required.

In FIG. 8, even though the tip 112 directly touches the bottom flat surface without touching the sidewall, the gradient change in the F-D curve occurs at the moment when the end of the tip 112 enters inside the trench due to the sidewall. Even though as illustrated in FIG. 7, the frictional force does not act on the tip 112, the tip 112 and the sidewall are very close so that the force by the interaction is generated.

When the number of sidewalls which affects the tip 112 increases, a force which is generated due to the relationship with the sidewall increases so that the gradient in the F-D curve increases. That is, in a case of proximity to one sidewall and a case of proximity to two sidewalls, there is a difference in the F-D curve as illustrated in FIG. 8.

As illustrated in FIG. 8, when a low force-set point is set, before the tip 112 touches the bottom flat surface, an error which determines that the approach is completed to lift the tip 112 is derived. That is, in the narrow and deep trench structure, even though the tip 112 is in direct contact with the bottom flat surface, it is necessary to set a somewhat higher force-set point.

*Method of setting force-set point according to present invention*

As described above, in order to measure the narrow and deep trench structure in a pin point mode, it is necessary to set different force-set points depending on approach situations. However, even though a shape of an object 1 to be measured has been already known, it is difficult to variably set the force-set point for every section so that the following method is proposed.

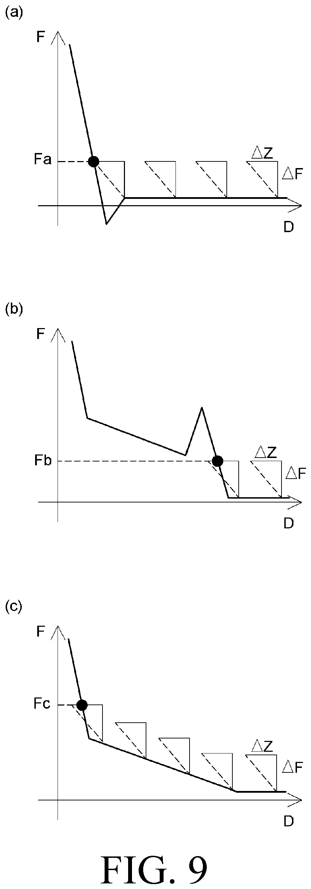

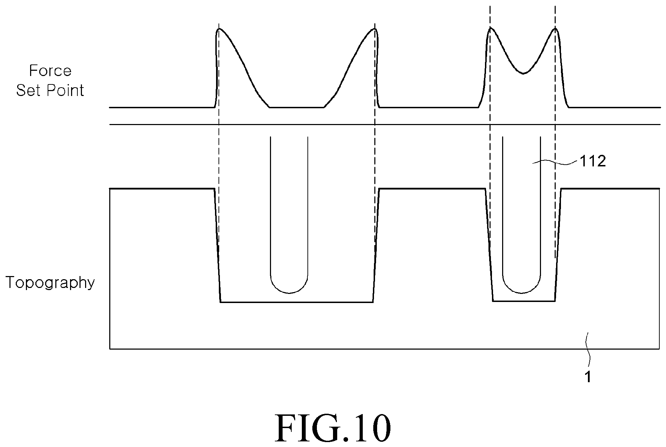

FIG. 9 is graphs of a F-D curve illustrating a variable force-set point setting method according to the present invention. FIG. 10 is a view illustrating a force-set point according to a shape of an object to be measured.

FIG. 9A illustrates an F-D curve in a situation A of FIG. 5, FIG. 9B illustrates an F-D curve in a situation B of FIG. 5 and FIG. 6; and FIG. 9C illustrates an F-D curve in a situation C or D of FIG. 5 and FIGS. 7 and 8.

When the F-D curves in various situations are observed, it is desirable to variably set the force-set point based on a state of a point on which the approaching operation is performed.

Specifically, it is desirable to determine the force-set point when a variance $\Delta F$ of a force of pressing the surface of the object 1 to be measured by the tip 112 with respect to a decreased amount $\Delta z$ of a distance between the tip 112 and the object 1 to be measured is equal to or higher than a specific value (that is, $\Delta F/\Delta z > K$, here, K is a previously set arbitrary value).

To be more specific, it is desirable to determine the force-set point by adding a variance $\Delta F$ of the force to a force measured in a distance with respect to a value obtained by subtracting a decreased amount $\Delta z$ from a current distance $z_{current}$ between the tip 112 and the object 1 to be measured as represented in Equation 1.

[Equation 1]

$$Fset(z) = F(z_{current} - \Delta z) + \Delta F$$

In the F-D curve as illustrated in FIG. 9, $\Delta F/\Delta z$ is represented as a gradient. When a large change in force compared to the approach distance is detected, the force-set point can be variably determined by completing the approaching operation. FIG. 9 illustrates that when a larger force than the gradient denoted by the dotted line is detected, the force-set point is determined.

Referring to FIG. 9A, as the approach proceeds, the approach is completed with Fa as the force-set point, and a relatively low force-set point is set.

Referring to FIG. 9B, as the approach proceeds, the approach is completed with Fb as the force-set point, and a relatively low force-set point is set. That is, when the tip 112 is in contact with the corner, the approach is completed before sliding down the sidewall.

Referring to FIG. 9C, as the approach proceeds, the tip 112 is in contact with the sidewall to slide down or in a section in which a force by the interaction from the sidewall is applied to gently increase the force, $\Delta F/\Delta z$ is smaller than a specific value K so that approach is continuously performed. Finally, when the tip 112 touches the bottom flat surface to sharply increase the force, the approach is completed. That is, a force-set point having a relatively large value like Fc is set.

However, the force-set point is desirably set so as not to exceed a predetermined maximum force-set point. Here, the previously determined maximum force-set point is desirably determined to be a value which is slightly larger than Fc.

Here, K is desirably set to be smaller than a gradient of a force which increases when the tip 112 is in contact with the corner portion as illustrated in FIG. 9B and larger than a gradient of a force which increases in a section which is affected by the sidewall as illustrated in FIG. 9C. The K is set to prevent from sliding down at the corner portion and push down the tip 112 to the end of the bottom flat surface when the tip touches the sidewall. For example, when $\Delta z$ is 10 to 20 nm, if it is confirmed that $\Delta F$ is appropriately 5 to 10 nN, K may be set to 0.5 N/m.

Referring to FIG. 10, it is confirmed that a low force-set point is set to a top corner portion and a high force-set point is set in a section in which the tip 112 approaches with the contact with the sidewall.

Further, in the case of the wide trench at the left, it is understood that even though the tip is not in contact with the sidewall, in the close section with the interaction, a high force-set point is set, rather than a minimum force-set point. It is further understood that in the middle portion, a force-set point which is almost the same as the top flat surface is set.

In contrast, in the case of the narrow trench at the right, even though the approach proceeds to the center of the trench, it is understood that a relatively high force-set point is set due to the interaction by two sidewalls.

As described above, different force-set points are set according to a situation of a surface of an object to be measured to prevent the damage of the tip 112 due to excessive press, overcome the interaction with the sidewall in a specific portion, and allow the tip 112 to be in contact with the bottom flat surface, thereby obtaining an accurate shape of the object 1 to be measured.

In the above description, it is described that the approach step is performed as a force-set point, but is not limited thereto.

The approaching operation is performed by an operation of controlling a characteristic value to reach a set point and the set point may be variably set based on a state of the point on which the approaching operation is performed.

Here, the characteristic value needs to be set as a value which varies depending on a distance between the tip 112 and the object 1 to be measured and may be determined as various values other than a force (pressing force) between the tip 112 and the object 1 to be measured as an example. For example, when a current is generated between the tip 112 and the object 1 to be measured, the characteristic value may be a current value and in the case of a non-contact mode in which the tip 112 vibrates, the characteristic value may be an amplitude value.

That is, the set point is determined when a variance of a characteristic value with respect to a decreased value of a distance between the tip 112 and the object 1 to be measured, that is, a gradient is equal to or higher than a specific value, so that the approaching operation may be controlled.

The above-described method of determining a force-set point by a pressing force may be applied to the other characteristic value in the same way.

The exemplary embodiments of the present invention have been described with reference to the accompanying drawings, but those skilled in the art will understand that the present invention may be implemented in another specific form without changing the technical spirit or an essential feature thereof. Thus, it is to be appreciated that the exemplary embodiments described above are intended to be illustrative in every sense, and not restrictive.

**Claims**

1. A method for measuring characteristics of a surface of an object to be measured by means of a measuring apparatus for measuring the characteristics of the object to be measured by measuring an interaction between a tip and the surface of the object to be measured, the method measuring the characteristics of the surface of the object to be measured by repeating an approaching operation of bringing the tip close to and in contact with the surface of the object to be measured and a lifting operation, wherein the approaching operation is performed by an operation of controlling a characteristic value to reach a set point and the set point is variably set on the basis of a state of a point on which the approaching operation is performed.

2. The method for measuring characteristics of a surface of an object to be measured of claim 1, wherein the characteristic value is a value which varies according to a distance between the tip and the object to be measured.

3. The method for measuring characteristics of a surface of an object to be measured of claim 2, wherein the set point is determined when a variance of the characteristic value with respect to a decreased amount of the distance between the tip and the object to be measured is equal to or higher than a specific value.

4. The method for measuring characteristics of a surface of an object to be measured of claim 2, wherein the characteristic value is a force that the tip presses the object to be measured.

5. The method for measuring characteristics of a surface of an object to be measured of claim 4, wherein the set point is a force-set point and the force-set point is determined when a variance $\Delta F$ in the force of the tip pressing the surface of the object to be measured with respect to a decreased amount $\Delta z$ of the distance between the tip and the object to be measured is higher than or equal to a specific value.

6. The method for measuring characteristics of a surface of an object to be measured of claim 5, wherein the force-set point is determined by adding the variance $\Delta F$ in the force to a force measured in the distance for a value obtained by subtracting the decreased amount $\Delta z$ from a current distance $z_{distance}$ between the tip and the object to be measured.

7. The method for measuring characteristics of a surface of an object to be measured of claim 6, wherein the force-set point is set so as not to exceed a predetermined maximum force-set point.

8. An atomic force microscope configured to measure a surface of an object to be measured by a probe unit including a tip and a cantilever, comprising:

    an XY scanner configured to move the object to be measured to allow the tip to relatively move in an XY direction with respect to the surface of the object to be measured;
    a head configured to mount the probe unit and include an optical system which measures a vibration or a flexure of the cantilever and a Z scanner configured to move the probe unit in a Z direction to control a distance between the tip and the surface of the object to be measured based on data obtained by the optical system; and
    a controller which controls the XY scanner and the head,
    wherein the controller controls the XY scanner and the head to measure a characteristic of the surface of the object to be measured by repeating an approaching operation of bringing the tip close to and in contact with the surface of the object to be measured and a lifting operation, and
    the approaching operation is performed by an operation of controlling such that the characteristic value reaches a set point and the set point is variably set on the basis of a state of a point on which the approaching operation is performed.

9. A computer program stored in a storage medium to perform the method of claim 1.

FIG. 1

FIG. 2

Approach step —— S10

Lift step —— S20

Shift step —— S30

# FIG. 3

FIG. 4

FIG. 5

(a)

(b)

# FIG. 6

(a)

(b)

# FIG. 7

FIG. 8

(a)

(b)

(c)

FIG. 9

Force
Set Point

Topography

112

1

# FIG.10

## INTERNATIONAL SEARCH REPORT

| | International application No. |
|---|---|
| | **PCT/KR2021/013060** |

**A.   CLASSIFICATION OF SUBJECT MATTER**

**G01Q 20/00**(2010.01)i; **G01B 7/012**(2006.01)i; **G01B 7/00**(2006.01)i; **G01B 7/26**(2006.01)i; **G01Q 10/04**(2010.01)i

According to International Patent Classification (IPC) or to both national classification and IPC

**B.   FIELDS SEARCHED**

Minimum documentation searched (classification system followed by classification symbols)

G01Q 20/00(2010.01); G01B 21/30(2006.01); G01B 5/28(2006.01); G01N 13/16(2006.01); G01N 37/00(2006.01); G01Q 60/24(2010.01); G01Q 60/32(2010.01); G01Q 60/34(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 팁(tip), 측정 대상(measuring object), 어프로치(approach), 셋포인트(set-point), 가변(variable)

**C.   DOCUMENTS CONSIDERED TO BE RELEVANT**

| Category* | Citation of document, with indication, where appropriate, of the relevant passages | Relevant to claim No. |
|---|---|---|
| Y | KR 10-2019-0046925 A (NEDERLANDSE ORGANISATIE VOOR TOEGEPAST-NATUURWETENSCHAPPELIJK ONDERZOEK TNO) 07 May 2019 (2019-05-07) See paragraphs [0010]-[0021], claims 1, 3 and 11 and figures 1-3. | 1-2,4,8-9 |
| A | | 3,5-7 |
| Y | US 9110092 B1 (NT-MDT DEVELOPMENT INC.) 18 August 2015 (2015-08-18) See column 5, lines 58-63. | 1-2,4,8-9 |
| Y | JP 07-325090 A (HITACHI CONSTR MACH CO., LTD. et al.) 12 December 1995 (1995-12-12) See paragraph [0008] and figure 3. | 2,4 |
| A | KR 10-2019-0107049 A (NEDERLANDSE ORGANISATIE VOOR TOEGEPAST-NATUURWETENSCHAPPELIJK ONDERZOEK TNO) 18 September 2019 (2019-09-18) See paragraphs [0022]-[0031] and figures 1-3. | 1-9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 January 2022** | **03 January 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/013060**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2011-0086730 A (VEECO INSTRUMENTS, INC.) 29 July 2011 (2011-07-29)<br>See paragraphs [0038]-[0106] and figures 1-23b. | 1-9 |

Form PCT/ISA/210 (second sheet) (July 2019)

**INTERNATIONAL SEARCH REPORT**
Information on patent family members

| International application No. |
| --- |
| **PCT/KR2021/013060** |

| Patent document cited in search report | | | Publication date (day/month/year) | Patent family member(s) | | | Publication date (day/month/year) |
| --- | --- | --- | --- | --- | --- | --- | --- |
| KR | 10-2019-0046925 | A | 07 May 2019 | EP | 3291286 | A1 | 07 March 2018 |
| | | | | EP | 3507824 | A1 | 10 July 2019 |
| | | | | US | 10775405 | B2 | 15 September 2020 |
| | | | | US | 2019-0227097 | A1 | 25 July 2019 |
| | | | | WO | 2018-044167 | A1 | 08 March 2018 |
| US | 9110092 | B1 | 18 August 2015 | None | | | |
| JP | 07-325090 | A | 12 December 1995 | JP | 3364531 | B2 | 08 January 2003 |
| KR | 10-2019-0107049 | A | 18 September 2019 | EP | 3349019 | A1 | 18 July 2018 |
| | | | | EP | 3568702 | A1 | 20 November 2019 |
| | | | | TW | 201831910 | A | 01 September 2018 |
| | | | | US | 10948458 | B2 | 16 March 2021 |
| | | | | US | 2019-0383774 | A1 | 19 December 2019 |
| | | | | WO | 2018-132005 | A1 | 19 July 2018 |
| KR | 10-2011-0086730 | A | 29 July 2011 | CN | 105319396 | A | 10 February 2016 |
| | | | | CN | 105319396 | B | 04 June 2019 |
| | | | | EP | 2864798 | A1 | 29 April 2015 |
| | | | | EP | 2864798 | B1 | 03 November 2021 |
| | | | | EP | 3293527 | A2 | 14 March 2018 |
| | | | | EP | 3293527 | A3 | 29 August 2018 |
| | | | | JP | 2017-223696 | A | 21 December 2017 |
| | | | | JP | 2018-036272 | A | 08 March 2018 |
| | | | | JP | 6517888 | B2 | 22 May 2019 |
| | | | | JP | 6691900 | B2 | 13 May 2020 |
| | | | | KR | 10-1990916 | B1 | 19 June 2019 |
| | | | | KR | 10-1991556 | B1 | 20 June 2019 |
| | | | | KR | 10-2018-0043410 | A | 27 April 2018 |
| | | | | KR | 10-2018-0077307 | A | 06 July 2018 |
| | | | | MY | 156153 | A | 15 January 2016 |
| | | | | RU | 2013128377 | A | 10 January 2015 |
| | | | | RU | 2571446 | C2 | 20 December 2015 |
| | | | | SG | 181154 | A1 | 30 July 2012 |
| | | | | US | 10197596 | B2 | 05 February 2019 |
| | | | | US | 10502761 | B2 | 10 December 2019 |
| | | | | US | 10520426 | B2 | 31 December 2019 |
| | | | | US | 10663483 | B2 | 26 May 2020 |
| | | | | US | 2019-0018040 | A1 | 17 January 2019 |
| | | | | US | 2020-0191826 | A1 | 18 June 2020 |
| | | | | WO | 2012-078415 | A2 | 14 June 2012 |
| | | | | WO | 2012-078415 | A3 | 04 April 2013 |
| | | | | WO | 2013-192617 | A1 | 27 December 2013 |

Form PCT/ISA/210 (patent family annex) (July 2019)

**EP 4 220 192 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004132823 A
- KR 102102637
- KR 100523031
- KR 101468061
- KR 101476808
- US 20120079635 A1
- KR 100646441